(19) Europäisches Patentamt

European Patent Office

Office européen des brevets

(11) **EP 1 008 789 B1**

(12) **EUROPEAN PATENT SPECIFICATION**

(45) Date of publication and mention
of the grant of the patent:
**23.02.2005 Bulletin 2005/08**

(51) Int Cl.⁷: **F16K 17/10**, F16K 17/04,
F16K 17/06

(21) Application number: **99123489.9**

(22) Date of filing: **25.11.1999**

(54) **Dual-effective section safety valve for relief of overpressure, with closure hysteresis**

Doppelsicherheitsventil zur Druckentlastung mit Schliesshysteresis

Double vanne de sécurité pour la détention de surpression avec hysteresis de fermeture

(84) Designated Contracting States:
**DE FR IT**

(30) Priority: **11.12.1998 IT MI982668**

(43) Date of publication of application:
**14.06.2000 Bulletin 2000/24**

(73) Proprietor: **Watts Cazzaniga S.p.A.**
**39100 Bolzano (IT)**

(72) Inventor: **Carlin, Franco**
**38100 Trento (IT)**

(74) Representative: **Petruzziello, Aldo et al**
**Racheli & C. S.p.A**
**Viale San Michele del Carso, 4**
**20144 Milano (IT)**

(56) References cited:
**US-A- 4 616 672        US-A- 5 676 172**
**US-A- 5 694 965**

• **PATENT ABSTRACTS OF JAPAN vol. 2000, no.
01, 31 January 2000 (2000-01-31) & JP 11 280928
A (NTC KOGYO KK), 15 October 1999
(1999-10-15)**

**Description**

The invention refers to a valve for systems for the distribution of water and hot water, designed for relieving overpressures which build up in the said systems, particularly those equipped with a heater for instantaneous hot water, in the case of failure of the normal regulating or safety equipment (e.g., thermostats, pressure switches). Such conditions can give rise to sudden overpressures of major proportions and at times of long duration, and are hence extremely dangerous for the entire hydraulic system.

During normal operation of the heater, overpressures may occur also on account of sudden interruptions of water flow (e.g., closing of a tap) or on account of the thermal inertia of the heater itself. These overpressures are in general smaller than the ones referred to previously, and in all cases are of short or very short duration.

There exist various types of valves that are able to relieve overpressure (see for instance US 5 676 172, corresponding to the preamble of claim 1). Generally, once the overpressure has been relieved, the closing of the valve takes place at a closing pressure $P_c$ that differs only slightly from the opening pressure $P_a$. This difference (referred to as hysteresis) is generally to be understood as a limit of the valve which is difficult to determine and hard to modify in the design phase.

Usual safety valves are moreover characterized by the fact that the degree of opening of the valve increases progressively with the pressure (progressive opening), attaining a maximum at a pressure that is considerably higher than the start-of-opening pressure; the valve then closes progressively when the pressure decreases.

This may be insufficient in the case of sudden overpressures. In such a case, it is required that, once the pressure in the circuit exceeds a calibration or set value of the valve, the latter should rapidly reach the maximum degree of opening and should remain completely open until the pressure drops below a closing pressure $P_c$.

An aim of the present invention is to make a safety valve for relieving overpressures. which can go into action rapidly whenever the pressure of the fluid in the system exceeds a calibration or threshold opening value $P_a$.

A further aim of the present invention is to make a valve of the aforesaid type, which, once opening has occurred, is able to remain open until the pressure of the fluid drops below a second threshold value, or closing value, $P_c$, with $P_c < P_a$.

The above purposes have been achieved by means of a safety valve as specified in Claim 1. Further new and useful characteristics of the valve are specified in the dependent claims.

The new valve basically comprises at least a body and a main pressure-containing or shutter member. The body has inlet coupling means and possible outlet coupling means connected together by a channel or duct for passage of a fluid, the overpressure of which is to be released, and has a shell which forms a chamber, the said shell having a release port for communication of said chamber with the outside environment, and the said chamber communicating with the fluid duct, via a duct slot or opening. The said main shutter member is spring biased into a closure position for closing the opening or slot and has a differentiated-section structure; i.e., the section or area on which the opening pressure acts is different from (smaller than) the section or area on which the closing pressure acts.

According to another preferred embodiment of the invention, the valve further comprises an expansion pressure-containing or shutter member in the said chamber, the said expansion shutter member being slidable within the shell of the valve coaxially with respect to the main shutter member and being provided with a release orifice which, in a discharge position of the expansion shutter member, is aligned with the release orifice of the shell. The expansion shutter member has a top aperture made in such a way as to be positioned in fluid communication with the duct opening, at least in a closed-valve position.

The valve according to the present invention achieves the above-mentioned purposes. In particular, it goes into action rapidly when an opening threshold pressure $P_a$ is exceeded, and enables fast exhaust of overpressure, in that the main shutter member opens completely; the valve remains completely open as long as the pressure exceeds $P_c$, and re-closes at a closing threshold pressure $P_c$ which is considerably different from $P_a$. The new valve enables programming of $P_c$ and $P_a$ with considerable precision in the design phase because such pressures are determined by different areas of the main shutter member. In the embodiment with expansion shutter member, the valve enables also the formation of a chamber or expansion space that is adequate for damping any possible (modest) transient increases in pressure without the fluid contained in the valve coming into contact with the outside environment.

Exemplary unrestrictive embodiments of the invention will be described hereinafter with reference to the attached drawings, in which:

> Fig. 1 is a longitudinal sectional view of a preferred embodiment of a safety valve according to the present invention, shown in a closed position;
> Fig. 2 is a cross sectional view according to the plane indicated by 2-2 in Fig. 1;
> Fig. 3 is a cross sectional view similar to that of Fig. 1 and shows the valve in an intermediate, or "damping", position, in which an accumulator chamber is formed inside the valve without the fluid inside it coming into contact with the external environment, in order to enable relief of modest overpressures of short duration, for instance ones due to manoeuvres carried out on other valves of the hydraulic system;

Fig. 4 is a longitudinal section similar to that of Fig. 1 and shows the valve in an open condition, in which it is releasing the excess pressure into the outside environment;

Fig. 5 shows an embodiment of the valve simplified with respect to the previous embodiment in that it is without the "damping" function, i.e. without the possibility of forming an accumulator chamber for relief of transient overpressures;

Fig. 6 is a cross sectional view according to the plane shown by 6-6 in Fig. 5; and

Fig. 7 is a cross sectional view similar to that of Fig. 6, but showing the valve in the opening condition, i. e., during pressure release.

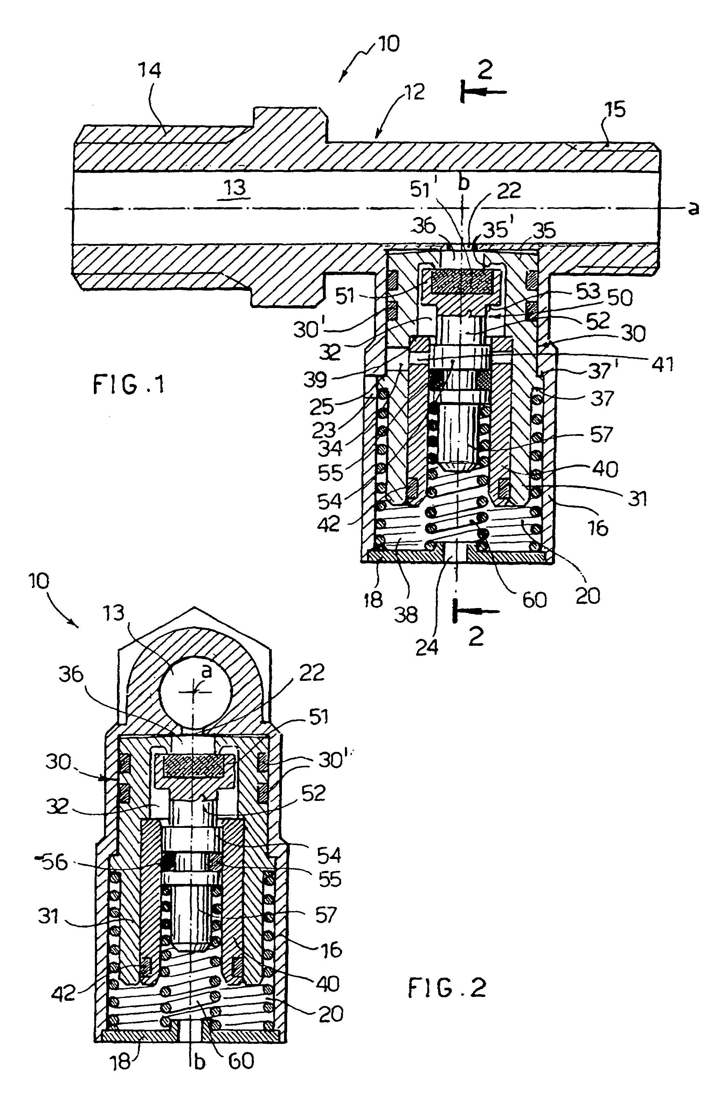

With reference first to Fig. 1, a valve 10 according to the present invention comprises a body 12 provided with an internal passage or duct 13 for the fluid and presenting an inlet attachment or coupling 14 and a (possible) outlet attachment or coupling 15 for connection to a fluid circuit. Note that the internal duct 13 is not necessarily a passage for the flow of fluid; it could be a space with a single inlet. A generally tubular shell 16 extends from the body 12, has its axis $b$ transverse to the axis $a$ of the duct 13, is closed at its end by a closing plate 18 and forms, inside, a shell chamber 20. The shell chamber 20 is in communication with the duct 13 via an opening 22 of the duct; the same chamber 20 is in communication with the outside environment through a discharge orifice 23 in the side wall and through a hole 24 in the closing plate.

In the shell chamber 20 is housed, in a sealed way, an expansion pressure-containing or shutter member 30, which is axially slidable along the axis $b$. The expansion shutter member is hollow so as to form a shutter chamber 32. The shutter chamber 32 is in communication with an orifice 34 in a side wall of the expansion shutter member and is open to the shell chamber 20 at the bottom in the figure. A skirt 31 of the expansion shutter member at the top forms an annular head 35 with a central opening 36. Preferably, around the opening 36 a circular tooth 35' is formed. The expansion shutter member is spring biased into closing position towards the duct 13 by a spring 38 which acts between the bottom or closing plate 18 and an external shoulder 37 on the expansion shutter member. The closure position of the expansion shutter member 30 is defined by the engagement between a shoulder surface 37' of the shutter member and a shoulder surface 25 of the shell 16 facing the shoulder surface 37'. The reference number 30' designates seals between the expansion shutter member and the shell of the body, said seals preventing fluid leakage to the chamber 20 (and outside through the hole 24).

The reference 40 designates an auxiliary cylinder which is housed, in a sealed manner, in the expansion shutter member and moves together with the latter.

The cylinder 40 has one or more side orifices 41 in an area corresponding to that of the orifice 34 of the expansion shutter member, is housed, in a sealed way, against an inside wall of the expansion shutter member by means of seal 42, and is positioned within the expansion shutter member by abutting against an inner shoulder 39 of the latter.

Inside the chamber 32 of the expansion shutter member and inside the cylinder 40 a main shutter or pressure-containing member 50 is slidably received. The main shutter member 50 comprises an enlarged head 51, with possible head seal 51', and a first stem portion 52 which defines, on the bottom face of the head in the figure, an annular surface 53. A second stem portion 54, which is a shutting or pressure-containing portion, forms an annular seat 55 in which a seal 56 is received to seal against an inner wall of cylinder 40. A further stem portion is indicated by 57.

A spring 60 between the closing plate 18 and a shoulder of the stem portion 54 biases the main shutter member 50 against the tooth 35' of the head of the expansion shutter member. When the head 51 of the main shutter member is against the tooth 35', the second stem portion 54 of the main shutter member closes the side orifice/s 41 of the auxiliary cylinder, and hence the orifice 34 of the expansion shutter member.

On the main shutter member 50 the following are defined: an area $A_{36}$, which is the area that is left exposed to fluid pressure by the tooth or rim 35' of opening 36 of the expansion shutter member; an area $A_{51}$, which is the area of the surface of the head 51 as seen in plan view; an area $A_{53}$, which is the area of annular surface 53; an area $A_{52}$, which is the area of the cross section of first stem portion 52; an area $A_{54}$, which is the area in plan view of the second stem portion 54 of the main shutter member; and an area $A_{35}$, which is the plan area of the surface defined by the circumference of the head 35 of the expansion shutter member, in plan view.

The operation of the valve will be described in what follows.

The valve is inserted in a circuit that is to be controlled, in fluid continuity with the said circuit, by means of the attachments 14 and (possibly) 15.

The following pressures are defined:

$P_1$ minimum pressure for start of formation of an expansion space $V_e$ (closed to the outside environment);

$P_2$ minimum pressure at which the expansion space $V_e$ reaches its maximum value (closed to the outside environment);

$P_a$ opening pressure, at which the valve opens to outside environment, and fluid pressure starts to be released outside;

$P_c$ closing pressure, at which the valve re-closes.

By means of an appropriate choice of the springs 38 and 60, it is possible to obtain $P_2 < P_c$.

The following possible operating conditions are achieved:

i) When in the duct 13 the pressure $P$ is lower than $P_1$, the expansion shutter member and the main shutter member are in the closed position shown in Figures 1 and 2; i.e., the spring 38 pushes the expansion shutter member against the shoulder 25, and the spring 60 pushes the main shutter member against the rim 35' of the head 35 of the expansion shutter member. The orifice 34 is closed by the second stem portion 54 of the main shutter member; the hole 24 is open to the atmosphere.

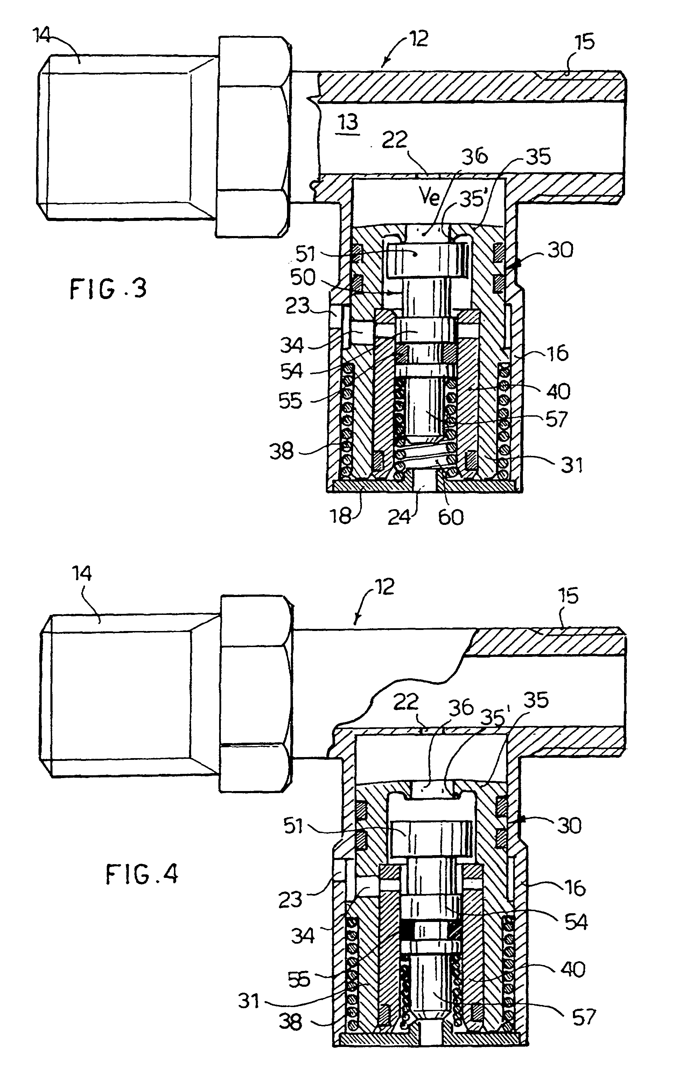

ii) When the pressure $P$ inside the duct 13 exceeds the pre-set value $P_1$ (which depends upon the springs 38 and 60), and the condition is $P_1 < P < P_2$, the force applied by the pressure $P$ to the system that comprises the expansion pressure-containing or shutter member 30 and the main pressure-containing or shutter member 50 is equal to $P$ multiplied by the area of the disk defined by the circumference of the expansion head, i.e., $(P \times A_{35})$. The expansion shutter member 30 moves along axis $b$ (downwards in Fig. 1) until at most it brings the orifice 34 in fluid communication with the discharge orifice 23 of the shell and draws along with itself, in this movement, the main shutter member 50. There is thus generated an expansion space $V_e$ (Fig. 3) in fluid communication with the duct 13. The head 51 of the main shutter member remains "closed" to form a seal against the rim 35'; there is no discharge of fluid outwards. The space $V_e$ enables containment of overpressures of short duration and minor proportions (for example, ones generated by the closing of a tap).

iii) When the pressure $P$ in the duct 13 further increases beyond the value $P_a$, whereas the position of the expansion shutter member 30 remains unvaried, i.e., resting with its skirt against the bottom plate 18, the main shutter member 50 moves along the auxiliary cylinder 40 of the expansion shutter member. The head 51 opens the opening 36, and the second stem portion 54 of the main shutter member frees the orifice 41 in the skirt of the expansion shutter member. Thus overpressurized fluid in the duct releases through opening 36, around the head 51, along the stem 52, and outwards through the orifice 41, and the orifices 34 and 23 that are practically aligned. This releases the excess pressure rapidly. Opening of the safety valve towards the outside environment thus occurs when the opening pressure $P_a$ in the duct 13 and in the expansion space $V_e$ generates a force equal to $P_a$ multiplied by the area $A_{36}$ of the aperture 36 and higher than the force of the spring 60, i.e., $(P_a \times A_{36}) > F_{60}$.

Once the head 51 of the main shutter member moves away from the rim 35', the pressure $P$ of the fluid is applied on more than one surface of the main shutter member 50; namely, on the entire top surface of the head $(A_{51} > A_{36})$, on the bottom annular surface of the head $(A_{53} = A_{51} - A_{52})$, and on the annular surface of the second stem portion 54 $(A_{54} - A_{52})$. The resulting force due to the pressures on the main shutter member is thus $P \times A_{51} - P(A_{51} - A_{52}) + P(A_{54} - A_{52}) = P \times A_{54}$, where a force has been considered positive if directed downwards (see Figs. 1-4).

The open condition persists as long as $P > P_c$.

iv) When the pressure drops below a value $P_c$, the main shutter member 50 lifts up against the expansion shutter member 30, and both members move to the closing position shown in Fig. 1.

Consequently, the opening pressure $P_a$, which acts on the area $A_{36}$, must overcome the force $F_{60}$ of the spring 60; i.e.,

$$P_a > \frac{F_{60}}{A_{36}}$$

The closing pressure $P_c$, which acts on the area $A_{54}$, must yield a force lower than $F_{60}$; namely,

$$P_c < \frac{F_{60}}{A_{54}}$$

Consequently, the forces $P_a$ and $P_c$ can be established with precision in the design phase by appropriately sizing the areas $A_{36}$ and $A_{54}$. In particular, we must have $A_{36} < A_{54}$ to obtain $P_c < P_a$.

As soon as the main shutter member 50 starts opening, the force with which the fluid pushes this shutter member downwards changes from $P \times A_{36}$ to $P \times A_{54}$ (the latter being higher). Consequently, as soon as the main shutter member starts opening, it moves rapidly to the position of complete opening, where it remains until $P$ drops below $P_c$. In this way, the phenomenon, typical of usual safety valves, of progressive opening (as $P > P_a$ increases) and progressive closing (when $P$ drops towards $P_c$) is eliminated.

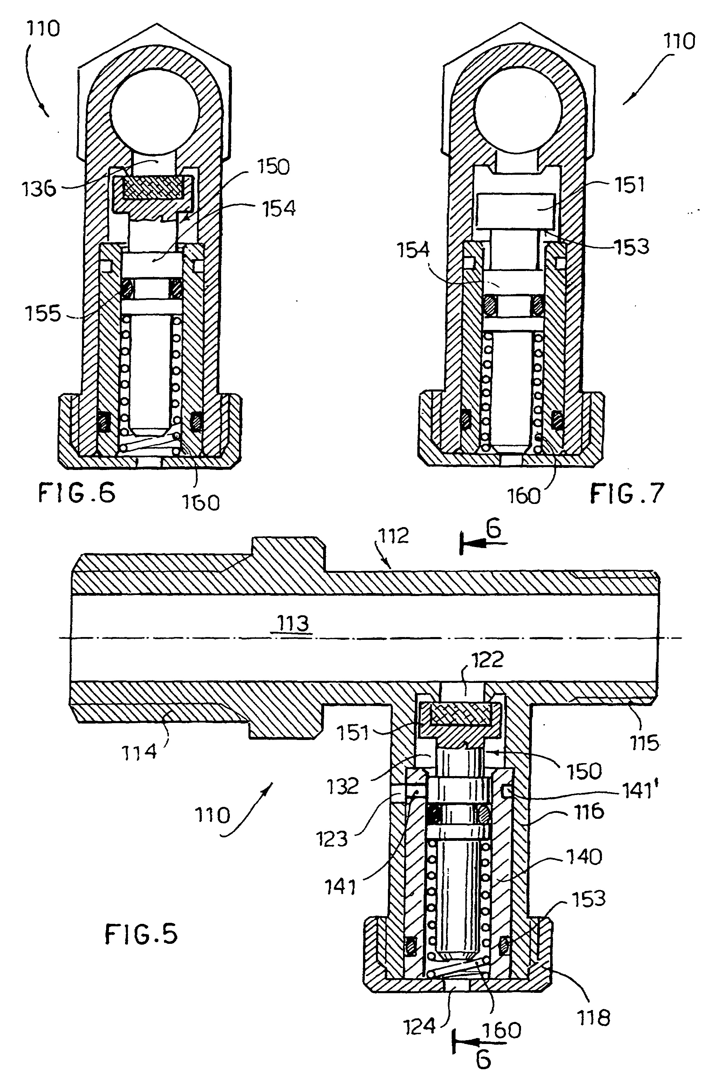

Although the embodiment described above is at present the preferred one, a valve is envisaged, and in certain cases may be used, as designated by the reference number 110 in Figs. 5, 6 and 7.

In the valve 110, the items corresponding to those of the valve 10 bear the same reference numbers increased by 100 and will not be described any further.

The valve 110 thus comprises a body 112 which defines a duct 113 for the passage of fluid. The body has an inlet attachment 114, and an outlet attachment 115 if it is the case, for application to a fluid circuit.

The body has a shell 116 provided with a discharge orifice 123 (Fig. 5). An auxiliary cylinder 140 is mounted fixed and in a sealed way inside the shell 116 and defines, together with the latter, a chamber 132, in which a main pressure-containing or shutter member 150 (which in this case is the only pressure-containing or shutter member) is free to slide in a sealed manner. The auxiliary cylinder 140 has at least one orifice 141 and a circumferential groove 141' communicating with the orifice. A bottom plate 118 is applied to the end of the shell 116 and has a hole 124 for communication with the outside environment. The shutter member 150 is housed in the chamber 132 and it is slidable, in a sealed way, with respect to the shell and to the auxiliary cylinder, and is spring biased to a closing position by a spring 160. The shutter member 150 has differentiated sections, as also has the shutter member 50 described previously for the embodiment shown in Figs. 1-5. In particular, it has a surface $A_{136}$ of an opening 136 towards the duct 113; a top surface $A_{151}$ of the head 151; an annular surface $A_{153}$ of annulus 153; and a surface $A_{154}$ of second stem portion 154 facing the annulus 153. We must have $A_{136} < A_{154}$ in order to obtain $P_c < P_a$.

Operation of the valve 110 comprises solely the phases iii) and iv) described for the valve 10.

The valve 110 does not enable formation of a damping space or expansion space $V_e$, as does the valve 10.

**Claims**

1. A safety valve for relieving overpressure, comprising:

   - a body (12; 112) defining an internal duct or space (13; 113) for communication with a fluid system the pressure of which is to be controlled; and
   - an extending shell (16; 116) of said body, the said shell having a discharge or release orifice (23; 123), an opening (22; 122) for communication with the internal duct of the said body, the said opening communicating with an inner chamber (20) of the shell, the said chamber being delimited by a bottom plate (18; 118) provided with a hole (24,124)

   **characterised by**

   - comprising a main piston-type pressure-containing or shutter member (50; 150) having a shutter head (51; 151) for closing the opening (22; 122), a first stem portion (52; 152), a second stem portion or shutting portion (54; 154) for shutting the discharge orifice (23; 123); the said shutter member (50; 150) being slidable within the shell chamber and spring-biased by means of a spring (60; 160); the said shutter member being moveable between a closing position, in which it exposes a part of its head to the pressure of the fluid in the duct, and an opening position, in which it exposes a number of surfaces with differentiated areas to the pressure of the fluid;
   - the said surfaces with differentiated areas being: the area (A36, A136) of said head surface closing the opening (22; 122) facing said duct; the area (A51, A151) of the entire surface of said head facing the opening (22; 122); the area (A53, A153) of the annular surface of the head on the face of the head opposite to said entire surface area (A51, A151) of the head; the cross sectional area (A54, A154) of the shutting portion (54, 154),

   whereby the cross sectional area (A54, A154) of the shutting portion (54; 154) is greater than the area (A36; A136) of the surface of the shutter head (51; 151) closing the opening (22; 122).

2. A valve according to Claim 1, **characterized in that** it further comprises an expansion pressure-containing or shutter member (30) slidably received within the shell chamber (20) and which in turn defines a shutter chamber (32) where the said main shutter member (50) is slidably received,
   the said expansion shutter member being spring-biased by a spring (38) into a closing position and having an orifice (34) which, in the opening position, is in communication with the pressure-discharge orifice (23) of the shell.

3. A valve according to Claim 1, **characterized in that**, in the closing position thereof, the said main shutter member is spring-biased by a spring (60; 160) against a tooth (35'; 135') which delimits an opening (36; 136) for communication with the fluid duct.

4. A valve according to Claim 2, **characterized in that** it further comprises a surface ($A_{35}$) defined by the circumference of the head (35) of the expansion shutting member.

5. A valve according to Claim 1, **characterized in that** the hole (24, 124) provided in the bottom plate (18, 118) connects the inner chamber (20) with the outside.

**Patentansprüche**

1. Ein Sicherheitsventil zum Ablassen von Überdruck, das folgendes umfasst:

- einen Körper (12; 112), der einen inneren Kanal oder Raum (12, 113) zwecks Verbindung mit einem Flüssigkeitssystem abgrenzt, dessen Druck kontrolliert werden soll; und
- eine sich erstreckende Hülse (16, 116) des genannten Körpers, wobei die genannte Hülse ein Entlade- oder Ablassloch (23, 123), eine Öffnung (22, 122) zur Verbindung mit dem inneren Kanal des genannten Körpers aufweist, und die genannte Öffnung mit einer inneren Kammer (20) der Hülse in Verbindung steht, wobei die genannte Kammer durch eine Bodenplatte (18, 118) begrenzt wird, in der sich ein Loch ( 24, 124) befindet,

**dadurch gekennzeichnet, dass**

- es ein haupt-kolbenartiges Druckbegrenzungs- oder Schieberelement (50, 150) mit einem Schieberkopf (51, 151) zum Verschließen der Öffnung (22, 122) umfasst, einen ersten Schaftabschnitt (52, 152), und einen zweiten Schaftabschnitt oder Verschlussabschnitt (54, 154) zum Verschließen der Ablassöffnung (23, 123); wobei das genannte Schieberelement (50, 150) gleitbar innerhalb der Hülsenkammer angeordnet ist und mit Hilfe einer Feder (60, 160) geschoben wird, und das genannte Schieberelement zwischen einer geschlossenen Stellung, in der es einen Teil seines Kopfs dem Druck der Flüssigkeit im Kanal aussetzt, und einer offenen Stellung, in der es eine bestimmte Anzahl von Oberflächen mit unterschiedlichen Bereichen dem Druck der Flüssigkeit aussetzt, bewegt werden kann;
- die genannten Oberflächen mit unterschiedlichen Bereichen folgende sind: der Bereich (A36, A136) der genannten Kopffläche, die die Öffnung (22, 122) schließt, welche dem genannten Kanal gegenüberliegt; der Bereich (A51, A151) der ganzen Oberfläche des genannten Kopfs, der der Öffnung (22, 122) gegenüberliegt; der Bereich (A53, A153) der ringförmigen Oberfläche des Kopfs an der Front des Kopfs, der dem genannten ganzen Oberflächenbereich (A51, a151) des Kopfs gegenüberliegt; der Querschnittbereich (A54, A154) des Verschlussabschnitts (54, 154),

wobei der Querschnittbereich (A54, A154) des Verschlussabschnitts (54, 154) größer als der Bereich (A36, A136) der Oberfläche des Schieberkopfs (51, 151) ist, der die Öffnung (22, 122) verschließt.

2. Ein Ventil gemäß Anspruch 1, **dadurch gekennzeichnet, dass** es des weiteren ein Dehnungs-Druckbegrenzungs- oder Schieberelement (30) umfasst, das gleitbar in der Hülsenkammer (20) untergebracht ist und das seinerseits eine Schieberkammer (32) umgrenzt, in der das genannte Hauptschieberelement (50) gleitbar angeordnet ist, wobei das genannte Dehnungs-Schieberelement, das durch eine Feder (38) in eine Verschlussstellung gedrückt wird, eine Öffnung (34) aufweist, die in geöffneter Stellung mit der Druckablass-Öffnung (23) der Hülse in Verbindung steht.

3. Ein Ventil gemäß Anspruch 1, **dadurch gekennzeichnet, dass** das genannte Hauptschieberelement in dessen geschlossener Stellung durch eine Feder (60, 160) gegen einen Zahn (35', 135') geschoben wird, der eine Öffnung (36, 136) zur Verbindung mit dem Flüssigkeitskanal begrenzt.

4. Ein Ventil gemäß Anspruch 2, **dadurch gekennzeichnet, dass** es des weiteren eine Oberfläche (A35) umfasst, die durch den Umfang des Kopfs (35) des Dehnungs-Verschlusselements begrenzt wird.

5. Ein Ventil gemäß Anspruch 1, **dadurch gekennzeichnet, dass** das Loch (24, 124), das sich in der Bodenplatte (18, 118) befindet, die innere Kammer (20) mit der Außenseite verbindet.

## Revendications

1. Valve de sécurité contre les surpressions, comprenant :

   - un corps (12 ; 112) délimitant un conduit ou espace interne (13; 113) de communication avec un système de fluide dont on doit contrôler la pression ; et
   - une enveloppe étendue (16 ; 116) dudit corps, ladite enveloppe ayant un orifice d'écoulement ou de délivrance (23 ; 123), une ouverture (22 ; 122) de communication avec le conduit interne dudit corps, ladite ouverture communiquant avec une chambre intérieure (20) de l'enveloppe, ladite chambre étant délimitée par une plaque de fond (18 ; 118) pourvue d'un orifice (24 ; 124)

**caractérisée en ce que**

   - elle comprend un dispositif d'obturation ou obturateur de type à piston principal (50 ; 150) ayant une tête d'obturation (51 ; 151) de fermeture de l'ouverture (22 ; 122), une première partie à tige (52 ; 152), une deuxième partie à tige ou portion de fermeture (54 ; 154) de fermeture de l'orifice d'écoulement (23 ; 123) ; ledit dispositif d'obturation (50 ; 150) pouvant coulisser dans la chambre de l'enveloppe et comprimé par un ressort (60 ; 160) ; ledit dispositif d'obturation étant mobile entre une position de fermeture, où il expose une partie de sa tête à la pression du fluide dans le conduit, et une position d'ouverture, où il expose un certain nombre de surfaces à zones différenciées à la pression du fluide ;

-   lesdites surfaces à zones différenciées étant : la zone (A36, A136) de ladite surface de la tête fermant l'ouverture (22 ; 122) vers le conduit ; la zone (A51, A151) de toute la surface de ladite tête vers l'ouverture (22 ; 122) ; la zone (A53, A153) de la surface annulaire de la tête sur la face de la tête opposée à ladite zone de la surface entière (A51, A151) de la tête ; la zone à section transversale (A54, A154) de la portion de fermeture (54, ; 154),

où la zone à section transversale (A54, A154) de la portion de fermeture (54 ; 154) est plus grande que la zone (A36, A136) de la surface de la tête de fermeture (51 ; 151) fermant l'ouverture (22 ; 122).

2.  Valve selon la revendication 1, **caractérisée en ce qu'**elle comprend également un dispositif d'obturation ou obturateur d'expansion (30) accueilli de façon coulissante dans la chambre de l'enveloppe (20) et qui définit à son tour une chambre d'obturation (32) où ledit obturateur principal (50) est accueilli de façon coulissante,
    ledit obturateur d'expansion étant comprimé par un ressort (38) dans une position de fermeture et ayant un orifice (34) qui, dans la position d'ouverture, est en communication avec l'orifice d'élimination de la pression (23) de l'enveloppe.

3.  Valve selon la revendication 1, **caractérisée en ce que**, dans sa position de fermeture, ledit obturateur principal est comprimé par un ressort (60 ; 160) contre une dent (35' ; 135') qui délimite une ouverture (36 ; 136) de communication avec le conduit du fluide.

4.  Valve selon la revendication 4, **caractérisée en ce qu'**elle comprend également une surface ($A_{35}$) définie par la circonférence de la tête (35) de l'obturateur d'expansion.

5.  Valve selon la revendication 1, **caractérisée en ce que** l'orifice (24 ; 124) prévu dans la plaque de fond (18 ; 118) relie la chambre intérieure (20) à l'extérieur.

FIG.1

FIG.2

FIG.3

FIG.4

110

136

150

154

155

FIG.6

160

110

151

154

153

160

FIG.7

112

113

6

122

151

132

150

114

141'

110

116

123

140

141

153

FIG.5

118

124

160

6